# EUROPÄISCHE PATENTSCHRIFT

(11) **EP 3 610 241 B1**
(45) Veröffentlichungstag und Bekanntmachung des Hinweises auf die Patenterteilung: **27.09.2023**
(21) Anmeldenummer: 18720134.8
(22) Anmeldetag: 12.04.2018
(51) Int. Cl.: G01N 21/3581, G01N 21/94, G01N 21/17, G01N 21/84

(54) **SYSTEM UND VERFAHREN ZUM DETEKTIEREN VON NICHTMETALLISCHEN, NICHT-WASSERHALTIGEN SUBSTANZEN IN EINER WASSERHALTIGEN PROBE**
SYSTEM AND METHOD FOR DETECTING NON-METALLIC, NON-WATER-CONTAINING SUBSTANCES IN A SAMPLE CONTAINING WATER
SYSTEME ET PROCEDE DE DETECTION DES SUBSTANCES NON METALLIQUES, NE CONTENANT PAS D'EAU DANS UN ECHANTILLON CONTENANT DE L'EAU

(30) Priorität: 12.04.2017 DE 102017206332
(43) Veröffentlichungstag der Anmeldung: 19.02.2020
(73) Patentinhaber: Fraunhofer-Gesellschaft zur Förderung der angewandten Forschung e.V., 80686 München (DE); Karlsruher Institut für Technologie, 76131 Karlsruhe (DE)
(72) Erfinder: MEYER, Johannes, 76131 Karlsruhe (DE); GRUNA, Robin, 76530 Baden-Baden (DE); NÜSSLER, Dirk, 53560 Vettelschoß (DE); LÄNGLE, Thomas, 76344 Eggenstein (DE)
(74) Vertreter: Pfenning, Meinig & Partner mbB
(86) Internationale Anmeldenummer: PCT/EP2018/059418
(87) Internationale Veröffentlichungsnummer: WO 2018/189309

(56) Entgegenhaltungen:
- EP-A1- 3 101 420
- JP-A- 2006 084 423
- US-A1- 2005 270 220
- PFEIFFER U R: "Silicon CMOS/SiGe transceiver circuits for THz applications", SILICON MONOLITHIC INTEGRATED CIRCUITS IN RF SYSTEMS (SIRF), 2012 IEEE 12TH TOPICAL MEETING ON, IEEE, 16. Januar 2012 (2012-01-16), Seiten 159-162, XP032125288, DOI: 10.1109/SIRF.2012.6160166 ISBN: 978-1-4577-1317-0
- JIANYUAN QIN ET AL: "The Detection of Agricultural Products and Food Using Terahertz Spectroscopy: A Review", APPLIED SPECTROSCOPY REVIEWS, Bd. 48, Nr. 6, August 2013 (2013-08), Seiten 439-457, XP055211863, ISSN: 0570-4928, DOI: 10.1080/05704928.2012.745418
- CHRISTIAN JORDENS: "Detection of foreign bodies in chocolate with pulsed terahertz spectroscopy", OPTICAL ENGINEERING, Bd. 47, Nr. 3, März 2008 (2008-03), Seite 037003, XP055182540, ISSN: 0091-3286, DOI: 10.1117/1.2896597

## Beschreibung

Die vorliegende Erfindung bezieht sich auf ein System zum Detektieren von nichtmetallischen, nicht-wasserhaltigen Substanzen in einer wasserhaltigen Probe, eine Anlage zur Verarbeitung von wasserhaltigen Proben, insbesondere zur Produktion, Konfektionierung und/oder Verpackung von Lebensmitteln als solche Proben, und ein Verfahren zum Detektieren von nichtmetallischen, nicht-wasserhaltigen Substanzen in einer wasserhaltigen Probe mittels eines solchen Systems oder einer solchen Anlage.

In vielen Bereichen der Lebensmittelindustrie ist es zur Qualitätssicherung nötig, die hergestellten Produkte vor dem Verkauf auf Verunreinigungen zu prüfen. Um eine hohe Verlässlichkeit der Qualitätsprüfung zu garantieren, muss die Prüfung automatisiert erfolgen. Es müssen Verunreinigungen ab einem Durchmesser von 1 mm erkannt werden können. Die Kosten des Prüfsystems dürfen einen gewissen Rahmen nicht überschreiten, um die Technologie auch für kleinere Unternehmen zugänglich zu machen. Damit verunreinigungsfreie Produkte nach der Prüfung auch verkauft werden können, muss die Prüfung zerstörungsfrei sein und darf auch selbst zu keinen Verunreinigungen führen. Unter "zerstörungsfrei" ist dabei zu verstehen, dass das Produkt weder zerlegt bzw. ggf. aus seiner Verpackung entnommen werden muss, noch dass eventuell zum Produkt gehörende Organismen (z.B. Bakterien in Milchprodukten) getötet werden. Insbesondere nicht-metallische Verunreinigungen (z.B. Kunststoffe) stellen dabei eine große Herausforderung dar.

In der Patentanmeldung JP2006084423 A wird eine Tranmissionsbilderzeugungsvorrichtung beschrieben, welche eine gefrorene Probe mit einer Terahertzwelle bestrahlt und welche mit der durch die Probe transmittierten Welle ein Bild erzeugt.

Die Patentanmeldung US2005/0270220 A1 beschreibt ein Bildgebungssystem im optischen und Mikrowellenbereich, wobei jeweils ein Bild aus den optischen Bilddaten und den Mikrowellenbilddaten erzeugt wird.

Das Dokument "Silicon CMOS/SiGe Transceiver Circuits for THz Applications", U.R. Pfeiffer, 2012 iEEE 12th optical meeting on silicon monolothic integrated circuits in RF systems, 16. Januar 2012, offenbart Sender-Empfänger Schaltkreise, welche SiGe-Verstärker umfassen.

Die Patentanmeldung EP 3101420 A1 beschreibt einen Sensor zur Überwachung eines Einfrierprozesses eines Produktes. Der Sensor umfasst eine THz-Quelle sowie einen Empfänger zum empfangen der vom Produkt refklektierten oder transmittierten Strahlung.

Bildgebende Hochfrequenzverfahren erfüllen die genannten Anforderungen. Jedoch besitzen diese Verfahren einen entscheidenden Nachteil: Die verwendete Strahlung wird von Wassermolekülen sehr stark absorbiert. Aus diesem Grund kann die Hochfrequenztechnik per se nicht zur Prüfung wasserhaltiger Lebensmittel eingesetzt werden.

Aus dem Stand der Technik sind weiter Röntgensysteme bekannt. Diese messen die Amplitude der Röntgenstrahlen nach Durchleuchten der Lebensmittel und vergleichen sie mit einem zuvor festgelegten Schwellwert. Liegen die Absorptionswerte von Ingredienzen und Verunreinigungen zu dicht beieinander, können einfache Röntgensysteme die Verunreinigungen kaum detektieren. Medizinische Systeme, die auf der Dual-Röntgen-Absorptiometrie basieren, nehmen zwei Inspektionsbilder bei unterschiedlichen Röntgenenergien auf. Dadurch können Knochen, Fettanteile und sonstige Weichmassen unterschieden werden. Prüfeinrichtungen dieser Art sind jedoch aufgrund ihres Zeit- und Kostenaufwands nicht für Inline-Anwendungen (d.h. für Echtzeitanwendungen z.B. bei Fertigungsstraßen) geeignet. Außerdem besteht ein erheblicher Aufwand für die wegen der für Menschen gefährlichen Röntgenstrahlung notwendigen Sicherheitsmaßnahmen. Mikrobiologische Lebewesen können von Röntgenstrahlung getötet werden. Da gerade Bakterien jedoch wichtiger Bestandteil mancher Lebensmittel sind (z.B. in Joghurt), sind auf Röntgenstrahlen basierende Verfahren hier nicht anwendbar.

THz-Systeme, die auf Basis von Lasern arbeiten, bieten eine Alternative zu Röntgensystemen und erlauben spektroskopische Analysen von Inhaltsstoffen. Jedoch ist die Ausgangsenergie entsprechender Laborsysteme zu gering, um eine ausreichende Eindringtiefe zu erreichen und ihre Abtastraten und Kosten sowie das Fehlen von kommerziell realisierbaren Zeilenkameras erlauben aktuell nur Punktmessungen mit geringen bis mittleren Updateraten. Systeme dieser Art sind für Inline-Anwendungen ebenfalls nicht geeignet.

Abbildende Mikrowellen- und Millimeterwellensysteme sind eine relativ neue Technologie. Aktuell sind erst wenige solcher Systeme auf dem Markt. Dazu gehört das ursprünglich von Synview entwickelte Millimeterwellen- und THz-System, das heute von Becker Photonics vertrieben wird (vgl. www.synview.com). Im Folgenden sind einige Patentanmeldungen bzw. Patente von Systemen zur Prüfung von Lebensmitteln mittels Millimeterwellenstrahlung aufgeführt: US 8716666 B1, JP2012 021880 A und CN 104 181 122 A.

Aufgabe der vorliegenden Erfindung ist es, eine kostengünstige Prüfung wasserhaltiger Lebensmittel zu ermöglichen, die die beschriebenen Probleme möglichst vollständig löst.

Diese Aufgabe wird durch ein System nach Anspruch 1, durch eine Anlage nach Anspruch 7 und ein Verfahren nach Anspruch 8 gelöst. Vorteilhafte Ausführungsvarianten lassen sich den abhängigen Ansprüchen entnehmen.

Das erfindungsgemäße System ist in Anspruch 1 beschrieben.

Die Tätigkeitsform (z.B. "wird" bzw. "werden") bedeutet für alle Patentansprüche, dass das System, Teile oder Bauelemente desselben so eingerichtet, ausgebildet und/oder positioniert ist/sind, dass die beschriebene Tätigkeit ausführbar ist. Diese Ausführbarkeit kann durch geeignete Hardware und/oder geeignete Software (z.B. in (einem) Programmspeicher(n) des Systems hinterlegte Computerprogramme) realisiert sein. Das System kann also geeignete rechnergestützte (z.B. PC- oder Mikrocontroller-basierte) Steuereinrichtungen oder auch Regelungseinrichtungen umfassen.

Die wasserhaltige(n) Probe(n) kann/können z.B. Lebensmittel, insbesondere Tiefkühlwaren, sein. Die nicht-wasserhaltige Substanzen können Fremdkörper, Verunreinigungen und Ähnliches sein. Insbesondere können solche Substanzen Festkörper beliebiger Form (z.B. Kunststoffkörper) und/oder Festkörper mit Durchmessern von ca. 1 mm und größer sein (wobei letztgenannte Mindestgröße abhängig von der Wellenlänge der THz-Strahlung und vom apparativen Aufbau vom Sender- und vom Empfängerabschnitt sein kann). Die Probe(n) und die nicht-wasserhaltige(n) Substanz(en) sind nicht Teil des zu schützenden Systems, sondern systemexterne Gegenstände.

Erfindungsgemäß umfasst der THz-Bereich bzw. der THz-Bereich Strahlung im Bereich zwischen 10 GHz und 50 THz, bevorzugt im Bereich zwischen 50 GHz und 10 GHz, besonders bevorzugt im Bereich zwischen 100 GHz und 3 THz (jeweils inklusive der Grenzwerte). Es geht also in der Regel um elektromagnetische Strahlung mit Wellenlängen im Submillimeterbereich.

Der Begriff des Abschnitts ist nicht körperlich zu verstehen, sondern funktional (gilt auch für den Wandlerabschnitt, siehe nachfolgend): So kann der Auswerteabschnitt Teil vom Empfängerabschnitt sein oder der Auswerteabschnitt kann körperlich getrennt vom Empfängerabschnitt vorliegen (z.B. kann der Empfängerabschnitt ein Detektor sein und der Auswerteabschnitt kann ein daran angeschlossener Server, Rechner, PC, ... sein). Ebenso kann der Empfängerabschnitt mehrere einzelne, örtlich voneinander getrennt positionierte Empfänger aufweisen. Ebenso kann der Senderabschnitt mehrere einzelne, örtlich voneinander getrennt positionierte Sender aufweisen. Beispielsweise kann beim Inline-Betrieb in einer Produktionsanlage oder -straße an verschiedenen, aufeinanderfolgenden Stationen und/oder Positionen in der Anlage bzw. Straße, z.B. vor dem Einfrieren, beim Einfrieren und nach dem Einfrieren, jeweils eine Sender-Empfänger-Kombination zur Aufnahme eines Bildes vorhanden sein. Die Empfänger können dann jeweils mit einem (gemeinsamen) Auswerteabschnitt (z.B. PC) verbunden sind. Insbesondere kann das Auswerten mikroprozessorgestützt erfolgen, das System kann also mikrocontrollerbasiert oder computergestützt arbeiten.

Der Senderabschnitt kann neben dem eigentlichen Emitter auch Strahlformungselemente o.ä. umfassen, die die vom Emitter abgegebene Strahlung ggf. beeinflussen (formen) und/oder (z.B. fokussiert) auf die (wasserhaltige) Probe richten können. Alle diese Systembauelemente können vom Begriff des Senderabschnitts umfasst sein. Entsprechendes gilt für den Empfängerabschnitt: von der Probe wieder abgegebene (insbesondere: durch die Probe hindurch transmittierte, aber auch an der Probe reflektierte) Strahlung kann z.B. umgelenkt, gebündelt etc. werden, bevor die eigentliche Bildaufnahme (s.u.) stattfindet.

Der Empfängerabschnitt kann insbesondere durch die Probe und/oder die Substanz(en) modifizierte (insbesondere: durch Transmission modifizierte) Strahlanteile (nachfolgend auch als TS abgekürzt bzw. mit dem Bezugszeichen TS versehen) empfangen. Grundsätzlich ist es aber auch möglich, den Senderabschnitt und den Empfängerabschnitt in Reflexionsanordnung zu positionieren.

Die modifizierten Strahlungsanteile TS können wie folgt definiert sein: Die auf die wasserhaltige Probe eingestrahlte Strahlung wird durch die Probe und/oder durch eine/die nicht-wasserhaltige Substanz so verändert (insbesondere: teilweise absorbiert), dass lediglich Anteile derselben (insbesondere: nicht absorbierte, also transmittierte Anteile - es sind aber in Reflexionsanordnung auch von der Probe zurückgeworfene Anteile denkbar) auf den Empfängerabschnitt einfallen, also von letzterem empfangbar sind.

Die Erfassung im Senderabschnitt ist eine Bilderfassung. Insbesondere werden also die TS in im Empfängerabschnitt in Form von Bildern erfasst, also aufgenommen. Die erfassten TS werden nachfolgend daher alternativ auch als Bildaufnahmen, Bildinformationen oder auch Bilddaten bezeichnet. Insbesondere kann es sich um zweidimensionale Bilder handeln, die von einem THz-Flächensensor des Empfängerabschnitts auf Basis der beim Empfängerabschnitt ankommenden TS erzeugt werden (2D-Bilddatengenerierung aus den vom Empfängerabschnitt nachgewiesenen TS).

Der Übergang (z.B. die Umwandlung) der Probe vom einen zum anderen Aggregatzustand (insbesondere der Wasseranteile darin) muss dabei nicht unbedingt vollständig sein. Beispielsweise ist also nicht ein vollständiges Schmelzen einer zuvor vollständig eingefrorenen Probe notwendig, sondern es reicht ggf. aus, dass lediglich Teile einer zuvor vollständig eingefrorenen Probe angeschmolzen werden, oder dass eine bereits teilweise angeschmolzene Probe vollständig schmilzt. Ebenso reicht in umgekehrter Richtung eventuell auch ein teilweises (z.B. bereichsweises) Einfrieren der wasserhaltigen Probe aus.

Der Übergang kann passiv passieren, also unbeeinflusst stattfinden: z.B. ein Schmelzen einer bereits eingefrorenen Probe (bei Zimmertemperatur). Oder er kann aktiv herbeigeführt bzw. bewirkt werden: z.B. ein Einfrieren (insbesondere: ein Schockgefrieren) der Probe in einem Gefrieranlagenabschnitt des Systems. Dabei findet der Übergang bevorzugt vom flüssigen in den festen Aggregatzustand statt (bzw. wird in dieser Richtung bewirkt), d.h. die Probe wird eingefroren.

Bei mehreren unterschiedlichen (Übergangs-)zuständen kann im Extremfall heißen, dass lediglich zwei Bilder der Probe in unterschiedlichem Zustand aufgenommen und ausgewertet werden. In der Regel wird aber eine Bildserie einer Vielzahl (z.B. 10, 50, 100) von Bildern zu unterschiedlichen Übergangszuständen (insbesondere also zeitlich aufeinanderfolgend) aufgenommen werden, die dann ausgewertet werden.

Vorteilhafte Merkmale des Verfahrens lassen sich Anspruch 9 entnehmen.

Die Zeitpunkte können in regelmäßigen Zeitabständen aufeinander folgen.

Beispielsweise kann der konstante Abstand jeweils zeitlich benachbarter THz-Bildaufnahmen einen Wert zwischen einer Sekunde und zehn Sekunden (inklusive Grenzwerte) beim Schockgefrieren eines tiefzukühlenden Gutes annehmen. Oder der konstante Abstand jeweils zeitlich benachbarter THz-Bildaufnahmen kann einen Wert zwischen einer Minute und zehn Minuten (inklusive Grenzwerte) beim Auftauen von Gefriergut annehmen. Es können (bevorzugt mit solchen regelmäßigen Zeitabständen jeweils zeitlich benachbarter Bilder) ganze Bildserien von zehn oder mehr, bevorzugt von 50 oder mehr, besonders bevorzugt von 100 oder mehr Bildern mittels des Empfängerabschnitts oder mittels Empfängern desselben (z.B. einzelnen THz-Kameras) aufgenommen werden.

Weitere vorteilhafterweise realisierbare Merkmale lassen sich Anspruch 2 entnehmen. (Gemäß der Anspruchsstruktur - dies gilt entsprechend für die Merkmale aller anderen abhängigen Ansprüche ebenso - können die Merkmale dieses Anspruchs unabhängig von denjenigen des Anspruchs 3 realisiert werden oder auch in Kombination damit.)
Der Einfrierabschnitt kann einen oder mehrere Froster (z.B. Plattenfroster, Kaltluftfroster oder kryogene(n) Froster) aufweisen oder daraus bestehen. Der Auftauabschnitt kann eine(n) oder mehrere Ofen/Öfen oder Mikrowellengerät(e) umfassen oder daraus bestehen. Dabei können wiederum mehrere der besagten Elemente zum Einfrieren oder Auftauen räumlich voneinander beabstandet voneinander positionierte Elemente z.B. einer Produktionsstraße sein. Siehe hierzu auch die Ausführungsbeispiele.

Weitere vorteilhafterweise realisierbare Merkmale lassen sich Anspruch 3 entnehmen.

Die Größe kann dabei eine durchschnittliche Größe (Median- oder Mittelwert), eine minimale Größe und/oder auch eine maximale Größe sein.

Weitere vorteilhafterweise realisierbare Merkmale lassen sich Anspruch 4 entnehmen.

Eine solche Transmissionsanordnung bedeutet in der Regel, dass die Probe zwischen dem Senderabschnitt und dem Empfängerabschnitt positioniert ist: Der Senderabschnitt (oder ein Teil desselben, z.B. ein einzelner Sender) strahlt die elektromagnetische Strahlung auf die Probe ein, diese Strahlung wird teilweise durch die Probe hindurch transmittiert und dabei (z.B. durch Absorption, Streuung oder dergleichen) geschwächt und zumindest Anteile der verbleibenden, aus der Probe austretenden Strahlung werden als Strahlungsanteile TS vom Empfängerabschnitt (oder von einem Teil desselben, z.B. von einem einzelnen Empfänger) erfasst.

Grundsätzlich ist aber auch eine System in Reflexionsanordnung denkbar: Der Senderabschnitt (oder ein Teil desselben, z.B. ein einzelner Sender) strahlt die elektromagnetische Strahlung auf die Probe ein, diese Strahlung wird zumindest teilweise von der Probe, z.B. durch Reflexion oder Streuung, zurückgeworfen (nach einer Strahlungsmodifikation an/in der bzw. durch die Probe) und zumindest Anteile der zurückgeworfenen Strahlung werden als Strahlungsanteile TS vom Empfängerabschnitt (oder von einem Teil desselben, z.B. von einem einzelnen Empfänger) erfasst.

Weitere vorteilhafterweise realisierbare Merkmale lassen sich Anspruch 5 entnehmen.

Es werden Differenzbilder von zu unterschiedlichen Zeitpunkten (also bei unterschiedlichen Probenzuständen) aufgenommenen Bildaufnahmen mittels des Auswerteabschnitts generiert und ausgewertet. Dabei können z.B. in den Differenzbildern diejenigen Bildbereiche, deren mittlerer Differenzwert bzw. Intensitäts- oder Amplitudenwert oberhalb eines (oberen) Schwellwerts t_{oben} liegt (nachfolgend: Änderungsbereiche) von denjenigen Bildbereichen (nachfolgend: Konstanzbereiche), deren mittlerer Differenzwert bzw. Intensitäts- oder Amplitudenwert unterhalb dieses Schwellwerts t_{oben} oder auch unterhalb eines (unteren) Schwellwerts tᵤₙₜₑₙ mit t_{oben} > tᵤₙₜₑₙ liegt, unterschieden werden. Die Änderungsbereiche können Bereiche der Probe sein, in denen keine nichtmetallischen, nicht-wasserhaltigen Substanzen (bzw. unerwünschte Fremdkörper oder Verunreinigungen) vorliegen, also die wasserhaltige Probe in nicht-verunreinigter Form vorliegt. Die Konstanzbereiche können Bereiche (der Probe) sein, in denen unerwünschte Fremdkörper oder Verunreinigungen vorliegen. Diese Differenzierung basiert auf der Annahme, dass durch den Übergangsprozess lediglich in der (eigentlichen) Probe selbst Änderungen der Permittivität für die THz-Strahlung stattfinden, nicht aber bei den Fremdkörpern oder Verunreinigungen. So hat Wasser z.B. in flüssiger Form eine deutlich geringere Transparenz (also Permittivität) für THz-Strahlen, als in gefrorener, also kristalliner Form (also als Eis), wo es (nahezu) transparent ist.

Während der Übergang der wasserhaltigen Probe vom flüssigen Aggregatzustand in den festen Aggregatzustand (oder umgekehrt) stattfindet, erfolgt jeweils für die mehreren unterschiedlichen Zustände der wasserhaltigen Probe bzw. zu denjenigen Zeitpunkten, bei denen jeweils die modifizierten Strahlungsanteile mittels des Empfängerabschnitts erfasst werden, zusätzlich eine (im Vergleich zur THz-Strahlung gesehen) hochaufgelöste optische Abbildung der Probe. Die optischen Aufnahmen spiegeln dabei jeweils denselben Zustand der Probe wider wie die (zeitgleiche) Abbildung mit THz-Strahlung.

Die optischen Bilder werden mittels des Auswerteabschnitts ausgewertet werden und mit den THz-Bildern fusioniert. Die Abbildungsvorrichtung kann insbesondere auch für die Bildregistrierung unterschiedlicher THz-Bilder relativ zueinander eingesetzt werden (dies kann nötig sein, wenn sich während der Aufnahme einzelner Bilder einer THz-Bildserie einzelne Bestandteile der Probe relativ zueinander, z.B. gerade auch bedingt durch besagten Übergang der Probe, verschieben).

Die Abbildungsvorrichtung kann insbesondere einen bildgebenden Flächensensor (Kamerasystem) umfassen, z.B. eine CCD- oder CMOS-Flächenkamera. Der sichtbare Bereich umfasst dabei den Wellenlängenbereich zwischen 350 nm und 750 nm (inklusive der Grenzwerte) bzw. Ausschnitte daraus. Der Empfängerabschnitt und die Abbildungsvorrichtung müssen dabei in der Regel geometrisch zueinander kalibriert werden.

Weitere vorteilhafterweise realisierbare Merkmale lassen sich Anspruch 6 entnehmen.

Hierfür wird nachfolgend auch die Abkürzung SiGe-Transceiver verwendet.

Eine erfindungsgemäße Anlage lässt sich Anspruch 7 entnehmen.

Ein einfaches erfindungsgemäßes Beispiel für eine solche Anlage ist eine Produktionsanlage mit genau zwei Sender-Empfänger-Paaren entlang einer Kühlkette, wobei mit dem ersten Paar zunächst THz-Bilder der Probe (z.B. von Tiefkühlpizza bzw. Tiefkühlpizzen) im nicht-gefrorenen Zustand aufgenommen werden und die Probe anschließend mit einem Förderband als Transportvorrichtung weitertransportiert wird, bevor schließlich mit dem zweiten Paar THz-Bilder der Probe im schockgefrorenen Zustand aufgenommen werden. Es können dann für jedes Probenexemplar Differenzbilder der beiden aufgenommenen Bilder erzeugt und ausgewertet werden. Die Transportvorrichtung kann also z.B. ein Förderband umfassen, auf dem die Proben verschiedene Sektionen der Anlage durchlaufen.

Ein erfindungsgemäßes Verfahren lässt sich Anspruch 8 entnehmen.

Die von der vorliegenden Erfindung verwendeten Millimeterwellen sind aufgrund ihrer längeren Wellenlänge in der Lage, in Materialien teilweise einzudringen und erlauben somit einen Blick in das Produkt hinein unabhängig davon, ob es verpackt ist oder nicht. Aufgrund ihrer Fähigkeit neben der Amplitude auch die Phase zu messen, kann das erfindungsgemäße System auch sehr geringe Kontrastunterschiede auflösen. Ab einer Frequenz von ca. 100 GHz bis 200 GHz können Strukturen bis zu einem Millimeter Durchmesser aufgelöst werden. Für die Lebensmittelprüfung müssen Verunreinigungen ab einem Millimeter Durchmesser detektiert werden können. Dieser Frequenzbereich ist erfindungsgemäß durch die Verwendung von SiGe-Schaltungen (Silizium-Germanium) abdeckbar.

Die Phase der transmittierten oder reflektierten Strahlung wird beim erfindungsgemäßen THz-System inhärent mitgemessen und kann für die weitere Verarbeitungsmethoden als zusätzlicher Kanal verwendet und gleichermaßen wie die Amplitude ausgewertet werden. Aufgrund eventueller Mehrdeutigkeiten bei Phasenmessungen können dabei Methoden der sogenannten Phasenentfaltung auf die gemessenen Phasenwerte angewandt werden. Alternativ können aus mehreren Messungen unter Verwendung unterschiedlicher Frequenzbänder im Hochfrequenzbereich auch die Signallaufzeiten aus der Phaseninformation berechnet werden, so dass eine Phasenentfaltung entfallen kann. In diesem Fall kann die Signallaufzeit als zusätzlicher Bildkanal betrachtet und gleichermaßen weiterverarbeitet werden.

Das erfindungsgemäße System ist somit wettbewerbsfähig realisierbar. Allerdings werden Millimeterwellen im besagten Frequenzbereich grundsätzlich besonders stark von Wassermolekülen absorbiert. Eine Bildgebung würde in sehr kontrastarmen Bildern mit einem schlechten Signal Rauschverhältnis resultieren. Die entstehenden Bilder würden in Bezug auf das zu lösende Problem wenig Information beinhalten, vermutlich Mehrdeutigkeiten aufweisen und sich aufgrund fehlender Spezifizität nicht zur Inspektion wasserhaltiger Lebensmittel verwenden lassen. Um wasserhaltige Lebensmittel dennoch einer Prüfung mit der erfindungsgemäßen Technik zugänglich zu machen, sieht die vorliegende Erfindung folgendes Vorgehen vor: Die Temperatur der Lebensmittel wird gezielt geändert, so dass ein Auftau- oder Einfriervorgang stattfindet.

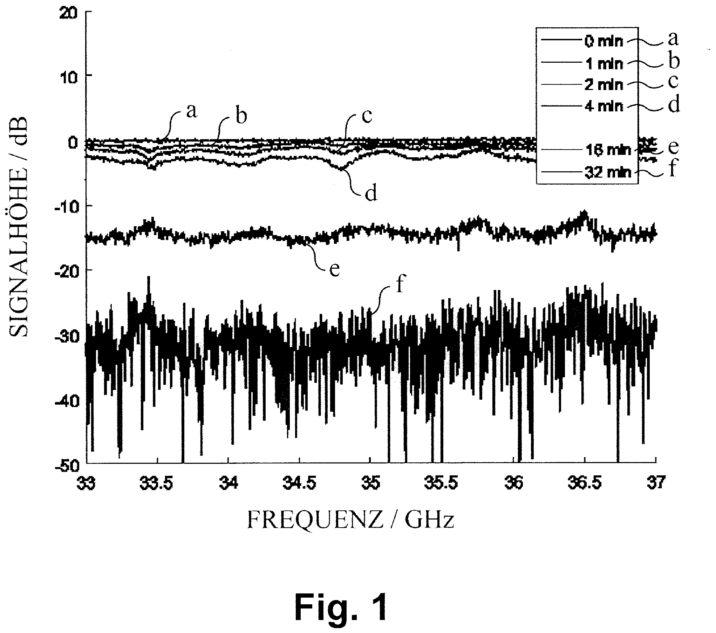

Währenddessen wird eine Serie von Inspektionsbildern im angegebenen Frequenzbereich aufgenommen. Gefrorenes Wasser nimmt eine kristalline Form an und verliert hierdurch seine Fähigkeit zu schwingen. Die elektromagnetischen Wellen werden nicht absorbiert und die gefrorenen Lebensmittel sind transparent für Mikrowellen (siehe Fig. 1). Figur 1 zeigt Amplitudengänge wasserhaltiger Lebensmittelbestandteile für unterschiedliche Zeitpunkte (in Minuten "min") während eines Auftauvorgangs und unterschiedliche Wellenlängen bzw. Frequenzen. Es ist zu erkennen, dass die Permittivität während des Auftauens ausgehend von vollständiger Transparenz (t = 0 min) zunehmend abnimmt.

Eine solche Serie umfasst dabei mindestens zwei Bilder, eine maximale Zahl von Bildern pro Serie ist nicht begrenzt. Vorteilhaft können aber z.B. 20, 50, 100 oder 200 Bilder je Serie aufgenommen werden. Die Bestimmung der Parameter kann wie folgt erfolgen: Aus den aufgenommenen Bildserien können mit verschiedenen, an sich bekannten Methoden (und deren Kombinierung) der Bildverarbeitung Merkmale (also Parameter) berechnet werden. Beispiele hierfür sind:
- Die Durchlässigkeit (also die Amplitude bei Transmissionsbetrieb) der einzelnen Bestandteile für unterschiedliche Temperaturen (entspricht dem physikalisch motivierten Modellansatz).
- Die Änderung der aufgenommenen Kanäle über den Vorgang der Temperaturänderung (also eine Ableitungsbildung).
- Die Form und Textur einzelner, sich voneinander abgrenzender Gebiete (also ein oder mehrere gebräuchliche Texturmerkmale aus der Bildverarbeitung, also z.B. statistische Merkmale wie Mittelwert, Varianz innerhalb eines bestimmten Bildfensters, Grauwertübergangsmatrizen, Gradientenhistogramme, Local Binary Patterns, Textur-Energiemaße nach Laws (entspricht einem datengetriebenen Modellansatz).

Siehe hierzu beispielsweise:
[1] Ludwig Abele. Statistische und strukturelle Texturanalyse mit Anwendungen in der Bildsegmentierung. Dissertation, Technische Universität München, 1982.
[2] Navneet Dalal und Bill Triggs. Histograms of Oriented Gradients for Human Detection. In Proc. IEEE Conference on Computer Vision and Pattern Recognition, Bd. 1, Seiten 886-893, Juni 2005.
[3] Robert Haralick, K. Sam Shanmugam und Its'hak Dinstein. Textural features for image classification. IEEE Transactions on Systems, Man, and Cybernetics, 3(6):610-621, November 1973.
[4] Kenneth Laws. Rapid texture identification. In Proceedings of the Seminar on Image Processing for Missile Guidance, Seiten 376-380. SPIE, 1980.
[5] Topi Mäenpää, Matti Pietikäinen und Timo Ojala. Texture classification by multipredicate local binary pattern operators. In Proc. 15th International Conference on Pattern Recognition, Bd. 3, Seiten 939 - 942, 2000.
[6] Majid Mirmehdi, Xianghua Xie und Jasjit Suri (Hrsg.). Handbook of texture analysis. Imperial College Press, 2008.

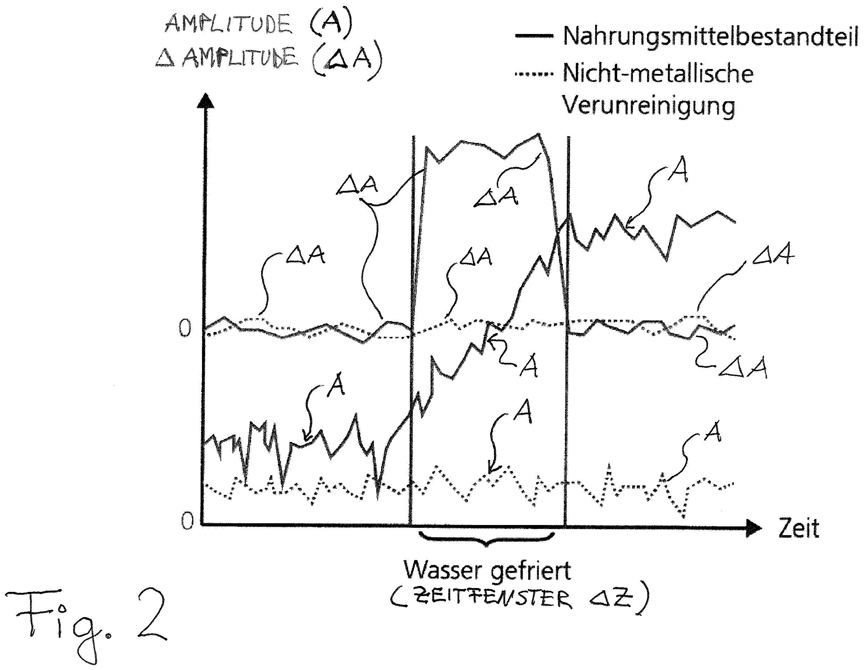

Wasser und damit die meisten Lebensmittelbestandteile ändern ihre Permittivitätje nach Aggregatzustand - Verunreinigungen behalten ihre Permittivität hingegen bei. Ein nachgeschaltetes automatisiertes Auswertesystem (vgl. den Auswerteabschnitt der Erfindung) kann die komplette aufgenommene Bildserie untersuchen. Da der Auftau- oder Einfriervorgang nur die Permittivität der Lebensmittelbestandteile ändert, heben sich nichtmetallische Verunreinigungen insbesondere dadurch hervor, dass sie in der kompletten Bildserie mit der gleichen Intensität erscheinen. Die nichtmetallischen Verunreinigungen unterscheiden sich also im Kern durch eine nahezu konstante Permittivität über einen gewissen Temperaturbereich. Eine Verarbeitung der gesamten Bildserie, z.B. mittels Differenzwertbildung, erlaubt auch bei sehr inhomogenen Lebensmitteln (z.B. Gemüsemischungen, Pizzas, etc.) die Detektion nichtmetallischer Verunreinigungen trotz der stark variierenden Kontrastverläufe (vgl. auch Fig. 2): Fig. 2 zeigt einen zeitlichen Verlauf einer Amplitude und einer geglätteten Amplitudendifferenz (Resultat aus einer Differenzwertbildung zwischen den Einzelaufnahmen einer Bildserie, mit Δ Amplitude bzw. ΔA bezeichnet) für Nahrungsmittelbestandteile und nicht-metallische Fremdkörper während eines Einfriervorgangs. Im markierten Zeitfenster ΔZ erlaubt die Amplitudendifferenz ΔA eine Detektion der Verunreinigungen.

Das mit ΔA beschriftete Signal entstammt einer Differenzwertbildung zwischen den Einzelaufnahmen einer Bildserie, entspricht also einer Approximation der ersten Ableitung des Amplitudenverlaufs. Eine Glättung kann z.B. über eine zeitliche Mittelwertbildung innerhalb eines (gleitenden) Zeitfensters durchgeführt werden. Dabei können die einzelnen Werte innerhalb des Fensters auch unterschiedlich gewichtet werden (z.B. Gaußglocke). Die Verrechnung der n (mit n = Ganzzahl, z.B. n = 100) Inspektionsbilder kann umfassen:
- Ggf. eine Registrierung der einzelnen Bilder zueinander (falls der Prüfling bzw. die Probe zwischen den Aufnahmen bewegt wurde oder sich Bestandteile durch die Temperaturänderung bewegt haben).
- Eine Berechnung des Verlaufs der einzelnen mittels der Hochfrequenzsensorik gemessenen Kanäle (Amplitude, Phase, Signallaufzeit) und ggf. deren Ableitung (vgl. Fig. 2).

Die optische Bildgebung kann die Detektion der Verunreinigungen bei der Registrierung der Einzelaufnahmen zueinander unterstützen, da ihre laterale Auflösung deutlich höher ist als die der THz- bzw. Hochfrequenzsensorik. Zudem können die Informationen der optischen Bildgebung dazu genutzt werden, zusammenhängende Gebiete der Probe bzw. des Prüflings zu identifizieren, zusätzliche Texturinformation im sichtbaren Bereich des Spektrums zu gewinnen usw.

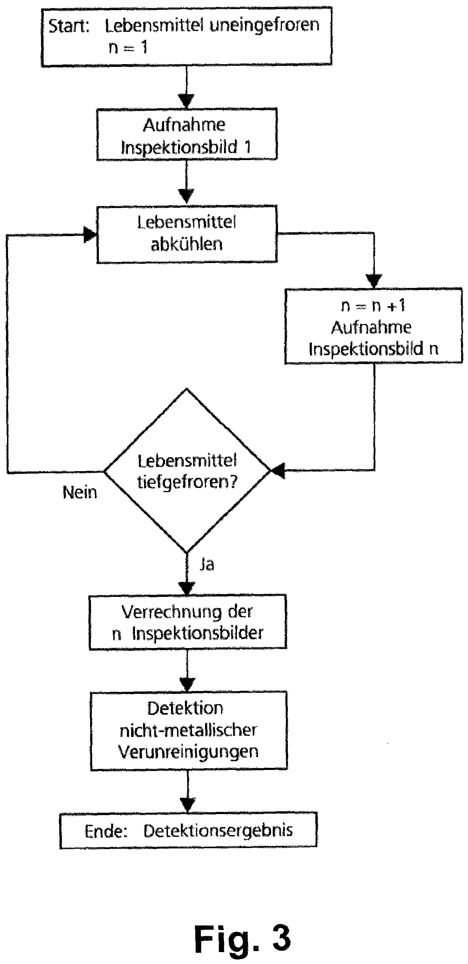

Eine Möglichkeit, wie ein erfindungsgemäßes System (gesteuert z.B. über ein Rechnersystem bzw. einen PC - als Bestandteil des oder umfassend den Auswerteabschnitt(s) - mit in seinem Speicher abgelegten, geeignet ausgebildeten Steuer- und Auswerteprogrammen) gemäß des vorangehend Gesagten mikroprozessor- und programmbasiert arbeiten kann, zeigt das Flussdiagramm aus Fig. 3 am Beispiel eines Einfriervorgangs der Probe(n). Weitere erfindungsgemäße Möglichkeiten sowie erfindungsgemäß anwendbare Verfahren der Bildverarbeitung werden nachfolgend erläutert.

Zusätzlich zu den Sensoren für die THz- bzw. Hochfrequenzbildgebung wird auch ein bildgebender Kamerasensor im sichtbaren Bereich (z.B. Flächenkamera in Kombination mit geeignetem Objektiv) eingesetzt. Diese Sensoren haben typischerweise eine deutlich feiner örtliche Auflösung als die Hochfrequenzsensoren. Der Kamerasensor kann daher einerseits unterstützend für die Detektion von Verunreinigungen verwendet werden und andererseits hochauflösende Bilddaten liefern, die für die nachfolgend beschriebene Registrierung der während des Gefriervorgangs gewonnenen Hochfrequenzaufnahmen vorteilhaft sind.

Erfindungsgemäß können folgende Methoden der Bildverarbeitung (1. bis 3.) zur Detektion der nichtmetallischen Verunreinigungen eingesetzt bzw. im erfindungsgemäßen System vermittels Computerprogrammen implementiert werden.

### 1. Registrierung

Um die gewonnene Bildserie geeignet weiterzuverarbeiten kann eventuell zuerst eine Registrierung der Bilddaten notwendig sein. Während des Einfriervorgangs kann es beispielsweise wegen einer mechanischen Bewegung oder Beförderung des Lebensmittels als Probe dazu kommen, dass es bezüglich der abbildenden Systeme anders orientiert ist. Im Rahmen der Registrierung werden die einzelnen Aufnahmen der Bildserie mittels einer geometrischen Transformation wieder zur Deckung gebracht. Die Transformation arbeitet dabei auf den kompletten Bildaufnahmen.

Der Ablauf der geometrischen Transformation kann wie folgt sein: Ein Punkt der Prüfszene **p** = (*pₓ p_{y}*, *p_{z}*)^{T} wird während der Datenaufnahme sowohl auf ein Pixel **h** = (*hₘ, hₙ*)^{T} der Hochfrequenzsensorik als auch auf ein Pixel **k** = (*kₘ, kₙ*)^{T} der zusätzlichen (Kamera-)Sensorik abgebildet bzw. von diesen erfasst. Eine geometrische Transformation *T*(·), welche die Abbildungsvorgänge von Koordinatensystem Hochfrequenzsensorik zu Weltkoordinaten der Prüfszene zu Koordinatensystem der Zusatzsensorik repräsentiert, erlaubt es, für ein Pixel **h** der Hochfrequenzsensorik das bzw. die korrespondierenden Pixel **k** = *T*(**h**) zu bestimmen.

Außerdem können die Bewegungseinflüsse oder der Aggregatzustandswechsel selbst dazu führen, dass nur einzelne Bestandteile des Lebensmittels zwischen den Aufnahmen ihre Position ändern. Dies ist besonders bei Lebensmitteln mit sehr heterogenen Zutaten wie beispielsweise einer Pizza denkbar (z.B. Bodenbelag unter einem Pilz oder einer Tomate friert schneller ein, Pilz oder Tomate rollt zur Seite). In diesem Fall sollten bei der Registrierung schon einzelne Bestandteile bzw. Zutaten des Lebensmittels erkannt und über die diversen Bildaufnahmen hinweg fest einander zugeordnet werden können, so dass die entsprechenden Bildwerte der Einzelbilder geeignet gemeinsam verarbeitet werden können.

Dies kann durch die Kombination aus dem Stand der Technik an sich bekannter Segmentierungsverfahren mit Trackingverfahren gelöst werden. Beispiele für erfindungsgemäß einsetzbare Segmentierungsverfahren sind wie folgt.
1. Bereichsorientierte Verfahren, wie z.B. direkt anhand der Sensorwerte mittels sog. "Region growing" Verfahren.
2. Kantenorientierte Verfahren
   a. Gradientenfilter (Kantenfilter)
   b. Wasserscheidentransformation
   c. Aktive Konturen (Gradient Vector Flow, Vector Field Convolution)
   d. Verfahren nach Mumford und Shah
   e. Graph-Cut-Verfahren.

Solche Segmentierungsverfahren lassen sich den folgenden Schriften entnehmen:
[1] Ludwig Abele. Statistische und strukturelle Texturanalyse mit Anwendungen in der Bildsegmentierung. Dissertation, Technische Universität München, 1982.
[7] Stephan Bischoff und Leif Kobbelt. Parameterization-free active contour models with topology control. The Visual Computer, 20(4):217-228, 2004.
[8] Laure Blanc-Feraud, Pierre Charbonnier, Gilles Aubert und Michel Barlaud. Nonlinear image processing: modeling and fast algorithm for regularization with edge detection. In Proc. IEEE International Conference on Image Processing, Bd. 1, Seiten 474- 477, Oktober 1995.
[9] Yuri Boykov und Gareth Funka-Lea. Graph Cuts and Efficient N-D Image Segmentation. International Journal of Computer Vision, 70(2):109-131, 2006.
[10] Bing Li und Scott Acton. Active contour external force using vector field convolution for image segmentation. IEEE Transactions on Image Processing, 16(8):2096-2106, August 2007.
[11] FernandMeyer. Topographie distance and watershed lines. Signal Processing, 38:113-125, 1994.
[12] David Mumford und Jayant Shah. Optimal approximations by piecewise smooth functions and associated variational problems. Communications on Pure and Applied Mathematics, 42(5):577-685, Juli 1989.
[13] Nobuyuki Otsu. A Threshold Selection Method from Gray-Level Histograms. IEEE Transactions on Systems, Man, and Cybernetics, 9(1):62-66, Januar 1979.

Zu den einsetzbaren Trackingverfahren siehe z.B.:
[14] Yilmaz, Alper, Omar Javed, und Mubarak Shah. "Object tracking: A survey." Acm computing surveys (CSUR) 38.4 (2006): 13.

Gerade für die beschriebene Aufgabenstellung der Registrierung kann der bereits beschriebene, zusätzliche, hochauflösende optische Flächensensor von zusätzlichem Nutzen sein. Allerdings ist dann in der Regel auch eine geometrische Kalibrierung der beiden Sensoren (also des THz-Sensors und des optischen Sensors) zueinander erforderlich. Hierzu kann ein entsprechendes Kalibrierobjekt dienen, auf dem Muster aufgebracht sind, die sowohl im sichtbaren Spektrum als auch im Millimeterwellenspektrum einen ausreichenden Kontrast erzeugen.

### 2. Bildfusion und Merkmalsextraktion

Nach der Registrierung entspricht ein Pixel (x,y) in allen Aufnahmen der Bildserie derselben Objektregion des zu prüfenden Nahrungsmittels. Nun können geeignete Methoden der Bildfusion dazu verwendet werden, die jeweiligen Informationen der Einzelaufnahmen zu fusionieren (zu kombinieren). Die Bildfusion kann auf verschiedenen Abstraktionsebenen erfolgen:
- Fusion der Signalwerte einzelner Aufnahmen,
- Fusion der aus den Rohwerten berechneten Merkmale oder
- Fusion der auf Basis der Merkmale gewonnenen Entscheidungen bezüglich einzelner Aufnahmen.

Diesbezüglich geeignete Methoden der Bildfusion sind wie folgt:
1. Fusion auf Signalebene
   a. Nach erfolgter geometrischer Transformation können für jeden von allen Sensorsystemen erfassten Punkt der Prüfszene die Signalwertvektoren (= alle Kanäle der einzelnen Sensoren) der unterschiedlichen Sensoren aneinandergehängt (konkateniert) werden, um einen höherdimensionalen Vektor zu erhalten. Dies kann auch über die Einzelaufnahmen hinweg erfolgen.
   b. Alternativ kann wie zuvor beschrieben auf dieser Ebene bereits der zeitliche Verlauf durch eine rechnerische Ableitungsapproximation erfasst werden.
2. Fusion auf Merkmalsebene
   a. Wie bei 1.a.
   b. Wie bei 2.a., jedoch muss für jedes Merkmal geprüft werden, ob eine zeitliche Verrechnung sinnvoll ist.
3. Fusion auf Entscheidungsebene
   a. Mehrheitsentscheid bzgl. aller Datenpunkte, die im Segmentierungsschritt als zusammenhängend gekennzeichnet wurden: Wird die Mehrheit als Fremdkörper erkannt, wird das komplette zusammenhängende Gebiet als Fremdkörper gewertet.
   b. Min-Entscheid: Wurden mindestens t der zu einem zusammenhängenden Gebiet gehörenden Datenpunkte als Fremdkörper klassifiziert, so wird das komplette Gebiet als Fremdkörper gewertet. Der Wert t ist ein anpassbarer Schwellwert.

Zudem lässt sich die Bildfusion auch auf unterschiedlichen Skalen durchführen (sog. Bildpyramidenverfahren). Solche Bildpyramidenverfahren können sein:
a. Gauß-Pyramiden
b. Laplace-Pyramiden
c. Pyramid-Linking
d. Wavelet-Analyse.

Siehe dazu auch:
[15] Werner Bäni. Wavelets: Eine Einführung für Ingenieure. Oldenbourg, München, 2. Auflage, 2005.
[16] Peter J. Burt und Edward H. Adelson. The Laplacian pyramid as a compact image code. IEEE Transactions on Communications, 31(4):532-540, April 1983.
[17] Peter J. Burt, Tsai-Hong Hong und Azriel Rosenfeld. Segmentation and estimation of image region properties through cooperative hierarchical computation. IEEE Transactions on Systems, Man and Cybernetics, 11(12):802-809, Dezember 1981.

Der Fusionsoperator, der die Rohwerte der Einzelbilder miteinander verrechnet, sollte speziell für die Detektion nichtmetallischer Verunreinigungen angepasst sein. Mögliche Varianten für diesen Operator sind:
- Bestimmung der maximalen / minimalen Permittivität eines Pixels über die gesamte Bildserie,
- Schätzung der ersten Ableitung (Berechnung der Änderung) der Permittivität eines Pixels über die gesamte Bildserie,
- Schätzung der zweiten Ableitung der Permittivität eines Pixels über die gesamte Bildserie, oder
- Konkatenation der Permittivitäten aller Zeitschritte (aller Aufnahmen der Bildserie) zu einem Vektor (ausgesetzte Bildfusion).

Die aus der Bildfusion resultierenden Werte können direkt als Merkmale für die Klassifikation genutzt werden.

Zudem können auch die Informationen, die in der lokalen Intensitätsverteilung enthalten sind (Ortsmerkmale bzw. Textur), als Merkmale verwendet werden. Beispielhaft können der mittlere Intensitätswert, die Varianz des Intensitätswerts oder auch komplexere Merkmale wie Local Binary Patterns oder Kennwerte von Grauwertübergangsmatrizen für lokale Ausschnitte der gewonnenen Inspektionsbilder berechnet werden.

### 3. Klassifikation

Um die Entscheidung zu treffen, ob nichtmetallische Verunreinigungen vorliegen, werden die aus den Bilddaten extrahierten Merkmale vorzugsweise von einem entsprechenden Klassifikator klassifiziert. Das Modell des Klassifikators kann entweder komplett anhand von Trainingsdaten gelernt werden oder einem physikalisch motivierten Modell entstammen.

Verwendbare Klassifikatoren sind:
a. Gauß-Klassifikator,
b. Entscheidungsbäume,
c. Support Vector Machines, oder
d. Neuronale Netze.

Siehe dazu:
[18] Christopher Bishop. Pattern recognition and machine learning. Springer, 2006.
[19] Richard Duda, Peter Hart und David Stork. Pattern classification. Wiley, 2. Auflage, 2001.

Ein datengetriebenes Modelllernen (trainingsdatenbasiert) kann wie folgt erfolgen: Eine ausreichend große Menge an Lebensmitteln wird gezielt mit nichtmetallischen Verunreinigungen versehen und unter Beobachtung durch die beschriebenen Sensoren tiefgefroren. Ein Anwender (Person) markiert in den Einzelaufnahmen die Verunreinigungen manuell, so dass diese Information bei den nachfolgenden Verarbeitungsschritten zur Verfügung steht. Nach erfolgter Registrierung und Bildfusion bzw. Merkmalsextraktion wird ein Klassifikator (ein Modell) dahingehend trainiert, dass er nichtmetallische Verunreinigungen detektieren kann. Dabei kann anhand von Trainingsdaten wie folgt trainingsdatenbasiert gelernt werden: Es werden Beispieldatensätze aufgenommen, die alle diejenigen Lebensmittelbestandteile beinhalten, die in der späteren Verwendung des erfindungsgemäßen Systems zu erwarten sind. Zudem werden künstlich Fremdkörper an bekannten Positionen eingebracht. Da die Positionen der Fremdkörper bekannt sind, können die entsprechenden Gebiete in den resultierenden Datensätzen als solche gekennzeichnet werden. Nun stehen Merkmalsvektoren für Fremdkörper-Datensätze und Nicht-Fremdkörper-Datensätze zur Verfügung, anhand der die Klassifikatoren trainiert werden können.

Eine physikalisch motivierte Modellierung bzw. Modellerstellung kann alternativ wie folgt erfolgen: Der Einfriervorgang und die damit einhergehende Änderung der Permittivität von (wasserhaltigen) Lebensmitteln und nichtmetallischen Verunreinigungen kann physikalisch modelliert werden. Aus diesem Modell lassen sich dann zur Klassifikation geeignete Merkmale ableiten. Beispielsweise kann die temperaturabhängige Änderung der Permittivität als Merkmal verwendet werden. Da für jede gewonnene Aufnahme die Umgebungstemperatur bekannt ist und an jedem Bildpunkt aus den Rohdaten die Permittivität bestimmt werden kann, kann wiederum für jeden Bildpunkt eine Schätzung abgegeben werden, ob es sich nach dem Modell dabei um ein Nahrungsmittel oder um eine nichtmetallische Verunreinigung handelt. Dabei kann ein physikalisches Modell wie folgt erstellt warden: Für alle Lebensmittelbestandteile, die für eine geplante Applikation im erfindungsgemäßen System zu erwarten sind, kann für die zu durchlaufende Temperaturspanne der Verlauf der elektromagnetischen Permittivität bestimmt werden. Im Prüfsystem können dann während der Temperaturänderung die gemessenen Permittivitätsverläufe mit den zuvor bestimmten Daten abgeglichen werden, um zwischen Fremdkörpern und Nahrungsmittelbestandteilen unterscheiden zu können.

Die vorliegende Erfindung realisiert ein kostengünstiges System zur Detektion nicht-metallischer Verunreinigungen in wasserhaltigen Lebensmitteln. Die Lebensmittel werden bis auf einen in der Regel sowieso vorgesehenen Einfriervorgang weder zerstört, erhitzt, berührt, ionisiert oder auf andere Weise beansprucht. Dadurch lassen sich
- Erhöhte Qualitätsstandards sicherstellen,
- die Güte von Lebensmitteln erhöhen,
- hochqualitative Lebensmittel zu günstigeren Preisen anbieten und
- die Qualität von Lebensmittellieferungen überprüfen.

Das Messsystem kann auch in Reflexion (vgl. nachfolgendes drittes Ausführungsbeispiel) anstatt in Transmission (vgl. die nachfolgenden Ausführungsbeispiele eins und zwei) realisiert werden. Dabei werden Senderabschnitt und Empfängerabschnitt (bzw. die zugehörigen Sender bzw. Empfänger) auf der gleichen Seite des zu prüfenden Lebensmittels angebracht und die vom Lebensmittel reflektierte Hochfrequenzstrahlung wird gemessen.

Von dem zu untersuchenden Lebensmittel kann in einem sehr einfachen erfindungsgemäßen Fall mittels des erfindungsgemäßen Systems ein Prüfbild direkt nach der Produktion im ungefrorenen Zustand und zu einem späteren Zeitpunkt an einem anderen Ort entlang der Kühlkette ein Prüfbild im gefrorenen Zustand aufgenommen werden. Diese beiden Bilder können mittels des Auswerteabschnitts ausgewertet bzw. verglichen werden. Die THz-Bildaufnahme des Systems kann also auch in zwei Teile entkoppelt werden (bzw. das System kann zwei Untersysteme aufweisen, wobei die Daten der beiden Untersysteme dann zusammen verwertet werden).

Die zu untersuchende Probe wird bei der Prüfung nicht manipuliert. Weitere charakteristische Merkmale der Erfindung sind: Der Einsatz eines bildgebenden Hochfrequenzsystems in Transmission (oder auch Reflexion), die Aufnahme mehrerer Prüfbilder (z.B. während des kontinuierlichen Tiefgefrierens des zu untersuchenden Lebensmittels) und die kombinierte Auswertung der mehreren Prüfbilder des bildgebenden Hochfrequenzsystems (wobei die Prüfbilder in der Regel in unterschiedlichen Aggregatzuständen des Prüflings gewonnen wurden).

Die vorliegende Erfindung kann überall dort Anwendung finden, wo in wasserhaltigen Lebensmitteln nicht-metallische Verunreinigungen (z.B. ab 1 mm Durchmesser) zerstörungsfrei, kostengünstig und ohne den Einsatz ionisierender Strahlung detektiert werden sollen oder müssen. Beispielhaft seien folgende Szenarien genannt:
- Es wird ein wasserhaltiges Lebensmittel produziert, das aufgrund einer geringen Gewinnspanne in großen Mengen produziert werden muss. Der Wert des fertigen Produkts erlaubt keinen Einsatz menschlicher Sichtprüfer zur Qualitätskontrolle. Allerdings kann es prozessbedingt zu Verunreinigungen mit nicht-metallischen Fremdkörpern kommen. Hier kann das System aufgrund seiner hohen Arbeitsgeschwindigkeit und der kostengünstigen Realisierbarkeit eingesetzt werden.
- Bei der Produktion eines Lebensmittels kommt es prozessbedingt zu nicht-metallischen Verunreinigungen, die im sichtbaren Spektrum (vom Menschen wahrnehmbar) nicht vom Lebensmittel selbst unterschieden werden können. Der Einsatz menschlicher Sichtprüfer ist somit nicht möglich. Im Spektrum der Millimeterwellen ist eine Unterscheidbarkeit von Lebensmittel und Fremdkörpern wahrscheinlich, weshalb die vorliegende Erfindung in diesem Fall eine automatisierte Qualitätskontrolle ermöglichen kann.
- Es wird ein wasserhaltiges Lebensmittel produziert, das als gewollten Bestandteil Mikroorganismen enthält, die auch nach einem Einfrier- und Auftauvorgang erhalten bleiben. Außerdem kommt es prozessbedingt gelegentlich zu nicht-metallischen Verunreinigungen und der Einsatz menschlicher Sichtprüfer ist entweder wirtschaftlich nicht sinnvoll und/oder aufgrund der Verlässlichkeit nicht möglich. In diesem Fall kann kein Röntgensystem zur Prüfung eingesetzt werden, da die ionisierende Strahlung die Mikroorganismen zerstören könnte. Eine Prüfung durch die vorliegende Erfindung hat keinen biologischen Einfluss und kann die Prüfaufgabe somit bewältigen.
- Ein Endkunde möchte sich eine Tiefkühlpizza zubereiten. Sein Backofen ist mit einem auf der vorliegenden Erfindung beruhenden Inspektionssystem bzw. System zum Detektieren ausgestattet. Beim Backen des Lebensmittels wird dessen Temperatur gezielte erhöht. Wird währenddessen eine Bildserie im Millimeterwellenbereich aufgenommen und entsprechend ausgewertet, können nicht-metallische Verunreinigungen detektiert und der Konsument kann gewarnt werden. Der Endkunde kann somit sowohl gegen Lebensmittelverunreinigungen, die bei der Produktion nicht entdeckt wurden, als auch gegen solche, die während des Transports in das Lebensmittel gelangten, geschützt werden.

Nachfolgend wird die Erfindung anhand von Ausführungsbeispielen dargestellt. Dabei zeigen:
- Figur 1:: Amplitudengänge wasserhaltiger Lebensmittelbestandteile.
- Figur 2:: Zeitliche Verläufe von Amplituden und von geglätteten Amplitudendifferenzen.
- Figur 3:: Ein Ablaufdiagramm eines erfindungsgemäßen Verfahrens.
- Figur 4:: Einen beispielhaften Aufbau für ein erstes erfindungsgemäßes System in Transmissionsanordnung.
- Figur 5:: Einen beispielhaften Aufbau für ein zweites erfindungsgemäßes System in Transmissionsanordnung.
- Figur 6:: Einen beispielhaften Aufbau für ein drittes erfindungsgemäßes System, diesmal in Reflexionsanordnung.

Zu den Figuren 1 bis 3 siehe bereits das vorangehend Beschriebene.

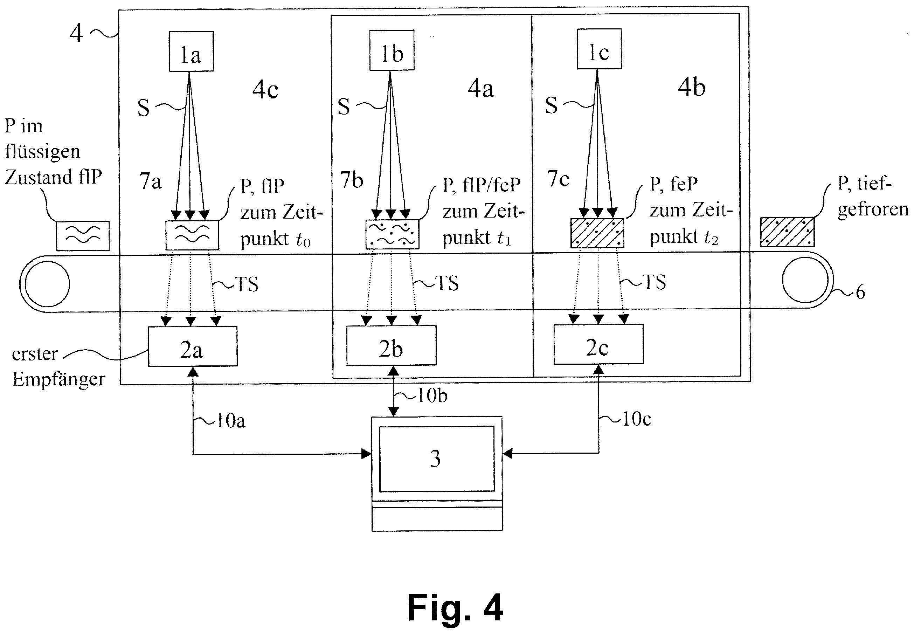

In Figur 4 weist der Senderabschnitt 1 mehrere (hier: drei) einzelne Sender, nämlich einen ersten Sender 1a, einen zweiten Sender 1b sowie einen dritten Sender 1c auf. Jeder dieser Sender emittiert elektromagnetische Strahlung S im THz-Bereich. Die einzelnen Sender 1a bis 1c sind beabstandet voneinander entlang des Transportweges eines Förderbandes 6 (Transportvorrichtung zum Transport von Proben P) angeordnet.

Besagtes Förderband 6 durchläuft (mit der/den darauf abgelegten sowie transportieren Probe(n) P) einen Wandlerabschnitt des Systems, der hier als Kühlungsabschnitt 4 zum Einfrieren der sich zunächst im flüssigen Zustand fIP befindenden Probe P ausgebildet ist. Die Probe P tritt im flüssigen Zustand fIP und auf dem Förderband 6 liegend (entlang der Transportrichtung desselben und somit auch in Transportrichtung der Probe P, vgl. Pfeile) zunächst in eine Vorkammer 4c des Kühlungsabschnitts 4 ein. In dieser Vorkammer 4c befindet sich der erste Sender 1a sowie der ihm zugehörige Empfänger 2a (zu den Empfängern vgl. nachfolgend). Sodann durchläuft die Probe P auf dem Förderband 6 den Vorkühlungsabschnitt 4a des Kühlungsabschnitts 4, wobei im Vorkühlungsabschnitt 4a der zweite Sender 1b zusammen mit dem ihm zugehörigen Empfänger (zweiter Empfänger 2b) angeordnet ist. Schließlich durchläuft, in Transportrichtung gesehen, die Probe P den Schockfrostabschnitt 4b des Kühlungsabschnittes 4. Im Schockfrostabschnitt 4b befindet sich der dritte Sender 1c zusammen mit dem ihm zugeordneten dritten Empfänger 2c. Das gezeigte erfindungsgemäße System ist somit "inline", also als Produktionsanlage bzw. innerhalb einer Produktionsanlage ausgebildet.

Jedem der drei Sender 1a bis 1c liegt (auf der sendergegenüberliegenden Seite des Förderbandes 6) jeweils genau ein Empfänger so gegenüber, dass die vom jeweiligen Sender emittierte THz-Strahlung S zunächst (zu einem Zeitpunkt, in dem die Probe P zwischen dem jeweiligen Sender einerseits und dem ihm zugeordneten Empfänger andererseits positioniert ist) die Probe P durchstrahlt, bevor sie durch das Förderband 6 hindurchtritt und schließlich zum jeweiligen Empfänger gelangt. Der jeweilige Empfänger erfasst von besagter elektromagnetischer Strahlung S die durch die Probe P modifizierten Strahlungsanteile TS. Die Strahlungsmodifikation beschränkt sich dabei auf die Probe P oder zumindest im Wesentlichen auf die Probe P, d. h. die Modifikation der Strahlung S durch das Förderband 6 wird herausgerechnet oder ist vernachlässigbar.

Bei den so von den jeweiligen Empfängern 2a bis 2c aufgenommenen bzw. erfassten, modifizierten THz-Strahlungsanteilen handelt es sich somit um durch die Probe P transmittierte THz-Strahlungsanteile TS, also um diejenigen Strahlungsanteile, die nach der Transmission durch die Probe P (im jeweiligen Einfrierzustand) in Strahlungsrichtung vom jeweiligen Sender zum jeweiligen Empfänger gesehen strahlausgangsseitig der Probe P noch im Strahlengang verblieben sind (die also weder in der Probe absorbiert worden sind, noch durch die Probe gestreut oder reflektiert worden sind).

Die von der Probe P zu denjenigen unterschiedlichen Zeitpunkten t, zu denen sich die Probe in Transportrichtung gesehen jeweils auf Höhe genau einer der Sender-Empfänger-Kombinationen 1x-2x (mit x = a, b oder c) befindet, durchlaufenen räumlichen Bereiche sind mit den Bezugszeichen 7a bis 7c versehen.

Genauer gesagt befindet sich zu einem ersten Zeitpunkt t₀ die Probe P (hier z. B. eine Tiefkühlpizza) im flüssigen Zustand fIP genau im Raumbereich 7a zwischen dem ersten Sender 1a und dem ihm auf der gegenüberliegenden Seite des Transportbandes 6 zugeordneten ersten Empfänger 2a. Die vom ersten Sender 1a emittierte THz-Strahlung S wird somit gemäß des flüssigen Zustands der Probe P in einen transmittierten Strahlanteil TS modifiziert, der vom ersten Empfänger 2a empfangen wird.

Zu einem späteren Zeitpunkt t₁ (mit t₁ > t₀ entsprechend der Vorschubgeschwindigkeit des Förderbandes 6) befindet sich die Probe P in einem Übergangszustand, nämlich in einem vermittels des Abschnitts 4a bewirkten, teilweise tiefgefrorenen Zustand, der mit fIP/feP bezeichnet ist. Dieser Zustand wird also im Raumbereich 7b innerhalb des Vorkühlungsabschnitts 4a bzw. im Raumbereich 7b zwischen dem zweiten Sender 1b und dem zweiten Empfänger 2b erreicht. Die zum Zeitpunkt t₁ durch die Probe P transmittierten Strahlungsanteile TS des zweiten Senders 1b, also die vom Empfänger 2b nachgewiesene Strahlung TS spiegelt somit den Zustand flP/feP der Probe P wider.

Schließlich erfolgt ganz analog zu einem noch späteren Zeitpunkt t₂ > t₁, zu dem die Probe P bereits im Schockfroster 4b vollständig eingefroren feP ist, eine weitere Bildaufnahme, indem die vom dritten Sender 1c emittierte, durch den Raumbereich 7c und die darin zum Zeitpunkt t₂ befindliche Probe P transmittierte Strahlung TS vom dem dritten Sender 1c zugeordneten dritten Empfänger 2c erfasst wird.

Der Empfängerabschnitt ist nachfolgend mit dem Bezugszeichen 2 bezeichnet und umfasst die drei Empfänger 2a bis 2c.

Die Probe P verlässt schließlich nach Durchlaufen des Abschnitts 4b den Kühlungsabschnitt 4, um konfektioniert (verpackt) und abtransportiert zu werden.

Der Auswerteabschnitt ist in Figur 4 als PC 3 mit geeigneten Steuer- und Auswerteprogrammen in seinem Speicher realisiert. Der PC 3 ist jeweils mit einer bidirektionalen Daten- und Steuerleitung (Leitungen 10a bis 10c) mit jedem der Empfänger 2a bis 2c verbunden. Über diese Leitungen 10a bis 10c werden die Empfänger des Empfängerabschnitts 2 bezüglich der Art und Weise ihrer Strahlungserfassung (z. B. hinsichtlich ihrer Verstärkungs- oder Empfindlichkeitsstufe und dergleichen) angesteuert. Ebenso werden über diese Leitungen 10a bis 10c die von den einzelnen Empfängern 2a bis 2c jeweils erfassten, transmittierten Strahlungsanteile TS in Form von Messsignalen an den PC 3 zu ihrer Auswertung übermittelt.

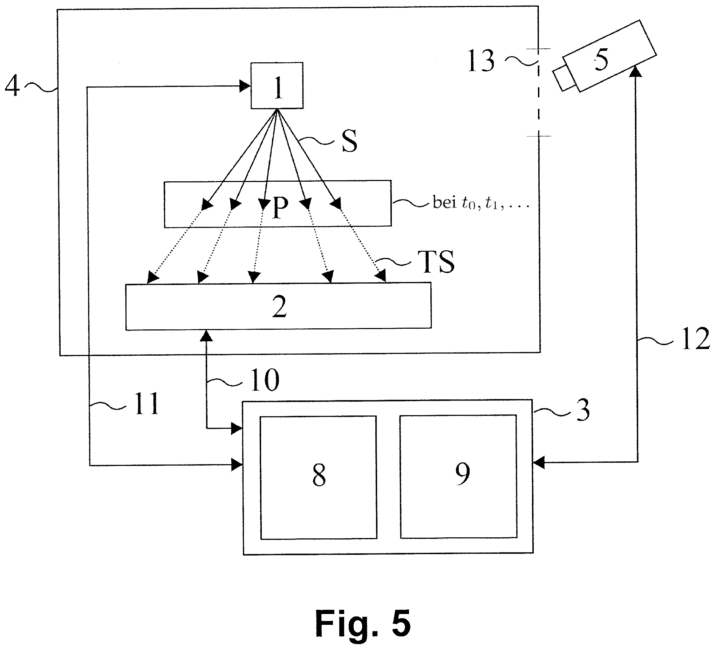

Ein weiteres System der Erfindung, das grundsätzlich ebenso wie das in Figur 4 gezeigte System ausgebildet ist, so dass nachfolgend nur die Unterschiede beschrieben werden, zeigt Fig. 5 (identische Bezugszeichen entsprechen somit identischen bzw. sich entsprechenden Merkmalen der Figur 4).

Anders als bei Figur 4 umfasst das System aus Figur 5 nur genau eine einzige Sender-Empfänger-Kombination 1-2 mit genau einem THz-Sender 1 als Senderabschnitt und genau einem diesem in Transmissionspositionierung gegenüberliegend angeordneten Empfänger 2 als Empfängerabschnitt. Die Probe P ist ortsfest in einem Raumbereich zwischen Sender 1 und Empfänger 2 positioniert. Das Element 4 ist hier ein Ofen zum Auftauen der Probe: Die Probe P wird somit (langsam) aufgetaut, so dass die unterschiedlichen Probenzustände zu den unterschiedlichen Zeitpunkten t₀ < t₁ < t₂ < t₃ ... am selben Ort in Transmissionsanordnung erfasst werden können.

Die vom Empfänger 2 zu diesen Zeitpunkten jeweils erfassten Strahlungsanteile TS werden als Messsignale über die bidirektionale Daten- und Steuerleitung 10, die den Empfänger 2 mit dem ebenfalls als PC ausgebildeten Auswerteabschnitt 3 verbindet, an den PC 3 übermittelt. Ebenso wie in Figur 4 steuert der PC 3 über die Leitung 10 den Empfänger 2. In Figur 5 ist darüber hinaus auch eine bidirektonale Steuer- und Datenleitung 11 gezeigt, die den PC 3 mit dem Sender 1 verbindet. Über diese 11 steuert der PC 3 die Einstellungen des Senders 1 und empfängt von diesem ausgesendete Rückmeldungen über seinen Betriebszustand oder dergleichen. (Aus Übersichtlichkeitsgründen sind entsprechende Steuer- und Datenleitungen in Figur 4 nicht gezeigt, auch in Figur 4 steuert der PC 3 jedoch die Sender 1a bis 1c und empfängt von diesen Rückmeldungssignale).

Der PC 3 umfasst einen Zeitgeber (Timer) 8, mit Hilfe dessen die Auslösung von Einzelaufnahmen der aufzunehmenden THz-Bildserie zu den einzelnen Zeitpunkten t₀, t₁, t₂, ... gesteuert wird. Das Bezugszeichen 9 kennzeichnet den Speicher des PC 3, die darin abgelegten Steuerprogramme für die Elemente 1 und 2 sowie die darin ebenfalls abgelegten Auswerteprogramme zum Auswerten der zu den unterschiedlichen Zeitpunkten t erfassten unterschiedlichen Strahlungsanteile TS.

Anders als in Figur 4 umfasst das erfindungsgemäße System der Figur 5 noch eine zusätzliche optische Abbildungsvorrichtung 5 (hier: CCD-Kamera; es kann aber auch eine CMOS-Kamera eingesetzt werden), mit der die Probe P zu den Aufnahmezeitpunkten t₀, t₁, ... der THz-Bilder jeweils zusätzlich hochaufgelöst (Pixelgröße z. B. 3 µm x 3 µm), also in deutlich höherer räumlicher Auflösung als im THz-Wellenlängenbereich, optisch erfasst werden kann. Die Bildgröße der Vorrichtung 5 kann beispielsweise 5120 x 4830 Pixel betragen. Der Ofen 4 weist, um die optische Beobachtung seines Innenraumes bzw. der Probe P zu ermöglichen, ein optisch transparentes Fenster 13 o. ä. auf. Die Vorrichtung 5 ist zur Steuerung und zum Datenaustausch über eine bidirektionale Steuer- und Datenleitung 12 mit dem PC 3 verbunden. Die von der Kamera 5 zum jeweiligen Zeitpunkt aufgenommenen optischen Bilder werden im PC 3 durch die Auswerteprogramme 9 mit den zugehörigen, also den jeweils zum selben Zeitpunkt aufgenommenen THz-Bildern hinsichtlich der Pose (Lage und Orientierung) aufeinander abgestimmt ("gematcht").

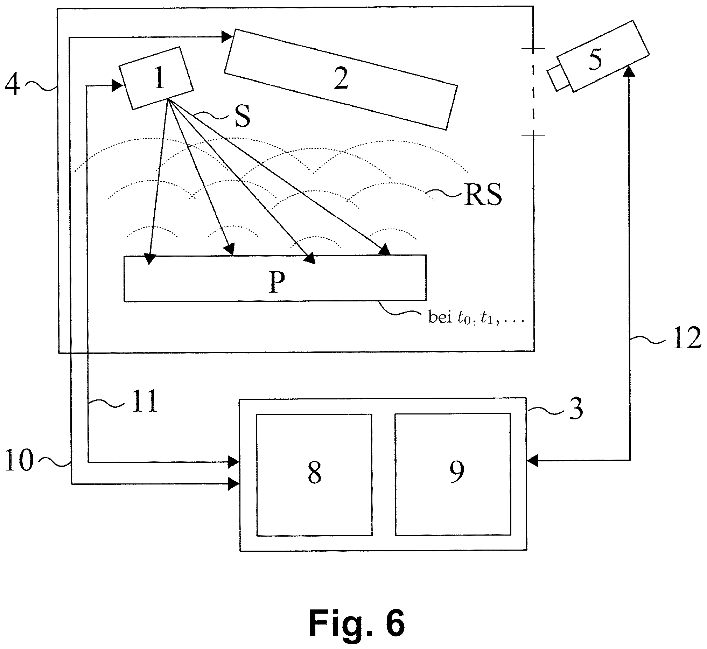

Ein weiteres System der Erfindung, das grundsätzlich ebenso wie das in Figur 5 gezeigte System ausgebildet ist, so dass nachfolgend nur die Unterschiede beschrieben werden, zeigt Fig. 6 (identische Bezugszeichen entsprechen somit identischen bzw. sich entsprechenden Merkmalen der Figur 5).

In Fig. 6 sind der der Sender 1 und der Empfänger 2 in Reflexionsanordnung auf einer Seite der Probe P angeordnet; die vom Empfänger empfangene, vor dem Empfang an der Probe P reflektierte Strahlung ist mit RS bezeichnet. Die von der Probe in unterschiedlichen Eindringtiefen reflektierte Strahlung wird vom Empfänger 2 erfasst. Die restlichen Schritte bleiben gleich wie bei Fig. 5.

In einer Variante von Fig. 6 (nicht gezeigt), können Sender und Empfänger in einem einzigen Gehäuse als Transceiver ausgebildet sein. (Die reflektierte Strahlung wird dann von diesem Transceiver erfasst.)

## Patentansprüche

1. System zum Detektieren von nichtmetallischen, nicht-wasserhaltigen Substanzen (F) in einer wasserhaltigen Probe (P), umfassend einen Senderabschnitt (1), der elektromagnetische Strahlung (S) im Terahertz-Bereich auf die Probe (P) hin gerichtet emittiert,
einen Empfängerabschnitt (2), der von besagter elektromagnetischer Strahlung (S) durch die Probe und/oder die Substanzen (F) darin modifizierte Strahlungsanteile (TS) als Bild erfasst und einen Auswerteabschnitt (3), der vom Empfängerabschnitt (2) erfasste Strahlungsanteile (TS) auswertet und feststellt, ob nichtmetallische, nicht-wasserhaltige Substanzen (F) in der wasserhaltigen Probe (P) vorhanden sind oder nicht,
wobei der Empfängerabschnitt (2) so ausgebildet ist, dass er, während ein Übergang der in der wasserhaltigen Probe (P) enthaltenen Wasseranteile vom flüssigen Aggregatzustand (flP) in den festen Aggregatzustand (feP) oder umgekehrt stattfindet, für mehrere unterschiedliche Zustände der wasserhaltigen Probe (P) bei dem Übergang jeweils modifizierte Strahlungsanteile (TS) erfasst, und wobei der Auswerteabschnitt (3) so ausgebildet ist, dass er Differenzbilder von zu unterschiedlichen Zeitpunkten erfassten Strahlungsanteilen (TS) generiert und auswertet,
wobei das System weiterhin eine Abbildungsvorrichtung (5) zur optischen Abbildung der wasserhaltigen Probe (P) umfasst, zur Abbildung der wasserhaltigen Probe (P) mit elektromagnetischer Strahlung mit Wellenlängen im für das menschliche Auge sichtbaren Bereich, wobei das System dafür eingerichtet ist, die optischen Abbildungen mit den erfassten Strahlungsanteilen (TS) zu fusionieren und zu unterschiedlichen Zeitpunkten erfasste Strahlungsanteile (TS) unter Verwendung der optischen Abbildungen mittels einer geometrischen Transformation in Deckung zu bringen.

2. System nach einem der vorhergehenden Ansprüche
***dadurch gekennzeichnet, dass***
der Übergang der in der wasserhaltigen Probe (P) enthaltenen Wasseranteile vom flüssigen Aggregatzustand (flP) in den festen Aggregatzustand (feP) oder umgekehrt mittels eines Wandlerabschnitts (4) des Systems bewirkt wird, bevorzugt mittels eines Wandlerabschnitts zum Ändern der Temperatur der wasserhaltigen Probe (P) bewirkt wird, insbesondere mittels eines Einfrierabschnitts zum Einfrieren der wasserhaltigen Probe (P) oder eines Auftauabschnitts zum Auftauen der wasserhaltigen Probe (P) bewirkt wird.

3. System nach einem der vorhergehenden Ansprüche
***dadurch gekennzeichnet, dass***
der Auswerteabschnitt (3), sofern er feststellt, dass (eine) nichtmetallische, nicht-wasserhaltige Substanz(en) (F) in der wasserhaltigen Probe (P) vorhanden ist/sind, die vom Empfängerabschnitt (2) erfassten Strahlungsanteile (TS) auch hinsichtlich eines oder mehrerer, die wasserhaltige Probe (P) und/oder die darin befindliche(n) nichtmetallische(n), nicht-wasserhaltige(n) Substanz(en) (F) charakterisierenden/r Parameter(s) auswertet,
wobei bevorzugt diese(r) Parameter sein oder umfassen kann/können: die Größe(n) und/oder Form(en) der detektierten nichtmetallischen, nicht-wasserhaltigen Substanz(en) (F), die jeweilige Lage oder Verteilung der detektierten nichtmetallischen, nicht-wasserhaltigen Substanzen) (F) in der wasserhaltigen Probe (P) und/oder der jeweilige Gewichts- oder Volumenanteil der detektierten nichtmetallischen, nicht-wasserhaltigen Substanz(en) (F) an der wasserhaltigen Probe (P).

4. System nach einem der vorhergehenden Ansprüche
***dadurch gekennzeichnet, dass***
der Senderabschnitt (1) und der Empfängerabschnitt (2) so angeordnet sind, dass der Empfängerabschnitt (2) die modifizierten Strahlungsanteile (TS) in Transmission erfasst.

5. System nach einem der vorhergehenden Ansprüche
***dadurch gekennzeichnet, dass***
die für die mehreren unterschiedlichen Zustände der wasserhaltigen Probe (P) beim Übergang der in der wasserhaltigen Probe (P) enthaltenen Wasseranteile vom flüssigen Aggregatzustand (flP) in den festen Aggregatzustand (feP) oder umgekehrt jeweils erfassten, modifizierten Strahlungsanteile (TS) mittels des Auswerteabschnitts (3) auf Amplitudendifferenzen oder auf Intensitätsdifferenzen und/oder auf Unterschiede in der Probenpermittivität ausgewertet werden.

6. System nach einem der vorhergehenden Ansprüche
***dadurch gekennzeichnet, dass***
der Senderabschnitt (1) und/oder der Empfängerabschnitt (2) eine oder mehrere Silizium-Germanium-basierte Sende-Empfangs-Vorrichtung(en) aufweist.

7. Anlage zur Verarbeitung von wasserhaltigen Proben (P), insbesondere zur Produktion, Konfektionierung und/oder Verpackung von Lebensmitteln als solche Proben (P), mit
einer Transportvorrichtung (6) zum Transport der Proben (P), und
einem System nach einem der vorhergehenden Ansprüche,
***dadurch gekennzeichnet, dass***
der Senderabschnitt (1) mehrere einzelne, jeweils örtlich voneinander beabstandete Sender (1a, 1b, 1c) und der Empfängerabschnitt (2) mehrere einzelne, jeweils örtlich voneinander beabstandete Empfänger (2a, 2b, 2c) aufweist,
wobei jeder Sender genau einem der Empfänger so zugeordnet ist, dass besagter Empfänger, im Moment des Transports einer/der Probe(n) (P) durch einen Bereich (7a, 7b, 7c) zwischen besagtem Sender und besagtem Empfänger mittels der Transportvorrichtung (6), durch die Probe(n) (P) modifizierte Strahlungsanteile des ihm zugeordneten Senders erfasst, und
wobei der Auswerteabschnitt (3) die von den mehreren Empfängern (2a, 2b, 2c) jeweils erfassten, modifizierten Strahlanteile auswertet.

8. Verfahren zum Detektieren von nichtmetallischen, nicht-wasserhaltigen Substanzen (F) in einer wasserhaltigen Probe (P) mittels eines Systems oder einer Anlage nach einem der vorhergehenden Ansprüche, wobei
mit einem Senderabschnitt (1) elektromagnetische Strahlung (S) im Terahertz-Bereich auf die Probe (P) hin gerichtet emittiert wird,
mit einem Empfängerabschnitt (2) von besagter elektromagnetischer Strahlung (S) durch die Probe und/oder die Substanzen (F) darin modifizierte Strahlungsanteile (TS) als Bild erfasst werden, und
mit einem Auswerteabschnitt (3) vom Empfängerabschnitt (2) erfasste Strahlungsanteile (TS) ausgewertet werden und festgestellt wird, ob nichtmetallische, nicht-wasserhaltige Substanzen (F) in der wasserhaltigen Probe (P) vorhanden sind oder nicht,
wobei ein Übergang der in der wasserhaltigen Probe (P) enthaltenen Wasseranteile vom flüssigen Aggregatzustand (flP) in den festen Aggregatzustand (feP) oder umgekehrt stattfindet, wobei für mehrere unterschiedliche Zustände der wasserhaltigen Probe (P) bei diesem Übergang jeweils modifizierte Strahlungsanteile (TS) mittels des Empfängerabschnitts (2) erfasst werden,
und wobei optische Abbildungen der wasserhaltigen Probe (P) in den mehreren unterschiedlichen Zuständen aufgenommen werden, mit elektromagnetischer Strahlung mit Wellenlängen im für das menschliche Auge sichtbaren Bereich,
wobei die optischen Abbildungen mit den erfassten Strahlungsanteilen (TS) fusioniert werden
und wobei Differenzbilder von zu unterschiedlichen Zeitpunkten erfassten Strahlungsanteilen (TS) mittels des Auswerteabschnitts (3) generiert und ausgewertet werden, wobei die zu unterschiedlichen Zeitpunkten erfassten Strahlungsanteile (TS) unter Verwendung der optischen Abbildungen mittels einer geometrischen Transformation in Deckung gebracht werden.

9. Verfahren nach dem vorhergehenden Anspruch
***dadurch gekennzeichnet, dass***
bei den mehreren unterschiedlichen Übergangszuständen der wasserhaltigen Probe (P) jeweils modifizierte Strahlungsanteile (TS) erfasst werden, indem zu mehreren unterschiedlichen, aufeinander folgenden Zeitpunkten (t0, t1, t2, ...) beim Übergang der wasserhaltigen Probe (P) vom flüssigen Aggregatzustand (flP) in den festen Aggregatzustand (feP) oder umgekehrt jeweils modifizierte Strahlungsanteile (TS) mittels des Empfängerabschnitts (2) erfasst werden.

## Claims

1. System for detecting non-metallic, non-aqueous substances (F) in an aqueous sample (P), comprising
a transmitter section (1) which emits electromagnetic radiation (S) in the terahertz range directed onto the sample (P),
a receiver section (2) which detects, as an image, radiation components (TS) of said electromagnetic radiation (S) which are modified by the sample and/or the substances (F) therein, and
an evaluation section (3) which evaluates radiation components (TS) detected by the receiver section (2) in order to establish whether non-metallic, non-aqueous substances (F) are present in the aqueous sample (P) or not,
the receiver section (2) being configured such that, while a transition of the water components contained in the aqueous sample (P) from the liquid aggregate state (flP) into the solid aggregate state (feP) or vice versa takes place, for a plurality of different states of the aqueous sample (P), it detects radiation components (TS) which are modified respectively during this transition, and the evaluation section (3) being configured such that it generates and evaluates difference images of radiation components (TS) which are detected at different times,
the system further comprising an imaging device (5) for optical imaging of the aqueous sample (P), for imaging the aqueous sample (P) with electromagnetic radiation with wavelengths in the range visible for the human eye, the system being configured to fuse the optical images with the detected radiation components (TS) and to make congruent by means of a geometric transformation the radiation components (TS) detected at different times, using the optical images.

2. System according to one of the preceding claims,
***characterised in that***
the transition of the water components contained in the aqueous sample (P) from the liquid aggregate state (flP) into the solid aggregate state (feP) or vice versa is effected by means of a converter section (4) of the system, preferably is effected by means of a converter section for changing the temperature of the aqueous sample (P), in particular is effected by means of a freezing section for freezing the aqueous sample (P) or a thawing section for thawing the aqueous sample (P).

3. System according to one of the preceding claims,
***characterised in that***
the evaluation section (3), if it establishes that (a) non-metallic, non-aqueous substance(s) (F) is/are present in the aqueous sample (P), evaluates the radiation components (TS) which are detected by the receiver section (2) also with respect to one or more parameter(s) which characterise(s) the aqueous sample (P) and/or the non-metallic, non-aqueous substance(s) (F) situated therein,
preferably this/these parameter(s) being able to be or to comprise: the size(s) and/or shape(s) of the detected non-metallic, non-aqueous substance(s) (F), the respective position or distribution of the detected non-metallic, non-aqueous substance(s) (F) in the aqueous sample (P) and/or the respective weight- or volume proportion of the detected non-metallic, non-aqueous substance(s) (F) in the aqueous sample (P).

4. System according to one of the preceding claims,
***characterised in that***
the transmitter section (1) and the receiver section (2) are disposed such that the receiver section (2) detects the modified radiation components (TS) in transmission.

5. System according to one of the preceding claims,
***characterised in that***
the modified radiation components (TS) which are detected respectively for the plurality of different states of the aqueous sample (P) during transition of the water components contained in the aqueous sample (P) from the liquid aggregate state (flP) into the solid aggregate state (feP) or vice versa are evaluated by means of the evaluation section (3) with respect to amplitude differences or intensity differences and/or differences in the sample permittivity.

6. System according to one of the preceding claims,
***characterised in that***
the transmitter section (1) and/or the receiver section (2) has one or more silicon-germanium-based transmission-reception device(s).

7. Unit for processing aqueous samples (P), in particular for the production, assembly and/or packaging of foods as such samples (P), having
a transport device (6) for transport of samples (P) and
a system according to one of the preceding claims,
***characterised in that***
the transmitter section (1) has a plurality of individual transmitters (1a, 1b, 1c) which are respectively spatially distanced from each other and the receiver section (2) has a plurality of individual receivers (2a, 2b, 2c) which are respectively spatially distanced from each other,
each transmitter being assigned to precisely one of the receivers such that said receiver, at the moment of transport of a/the sample(s) (P), through a region (7a, 7b, 7c) between said transmitter and said receiver by means of the transport device (6), detects radiation components, which are modified by the sample(s) (P), of the transmitter assigned thereto, and
the evaluation section (3) evaluating the modified beam components which are detected respectively by the plurality of receivers (2a, 2b, 2c).

8. Method for detecting non-metallic, non-aqueous substances (F) in an aqueous sample (P) by means of a system or a unit according to one of the preceding claims,
electromagnetic radiation (S) in the terahertz range being emitted by a transmitter section (1) directed towards the sample (P), with a receiver section (2) of said electromagnetic radiation (S), radiation components (TS) which are modified by the sample and/or the substances (F) therein being detected as an image, and with an evaluation section (3), radiation components (TS) which are detected by the receiver section (2) being evaluated in order to establish whether non-metallic, non-aqueous substances (F) are present or not in the aqueous sample (P),
a transition of the water components contained in the aqueous sample (P) from the liquid aggregate state (flP) into the solid aggregate state (feP) or vice versa taking place, radiation components (TS) which are modified respectively, for a plurality of different states of the aqueous sample (P), during this transition being detected by means of the receiver section (2),
and optical images of the aqueous sample (P) being recorded in the plurality of different states, with electromagnetic radiation with wavelengths in the range visible for the human eye,
the optical images being fused with the detected radiation components (TS)
and difference images of radiation components (TS) which are detected at different times being generated and evaluated by means of the evaluation section (3), the radiation components (TS) detected at different times being made congruent by means of a geometric transformation, using the optical images.

9. The method according to the preceding claim,
***characterised in that***
in the plurality of different transition states of the aqueous sample (P), radiation components (TS) which are modified respectively are detected by detecting, by means of the receiver section (2), at a plurality of different, consecutive times (t0, t1, t2...) during the transition of the aqueous sample (P) from the liquid aggregate state (flP) into the solid aggregate state (feP) or vice versa, radiation components (TS) which are modified respectively.

## Revendications

1. Système de détection de substances non métalliques, ne contenant pas d'eau (F) dans un échantillon (P) contenant de l'eau, comprenant
une section d'émission (1) qui émet un rayonnement électromagnétique (S) dans la plage des térahertz dirigé vers l'échantillon (P),
une section de réception (2) qui acquiert sous forme d'image des proportions de rayonnement (TS) modifiées par ledit rayonnement électromagnétique (S) par l'échantillon et/ou les substances (F) dans celui-ci, et
une section d'évaluation (3) qui évalue des proportions de rayonnement (TS) acquises par la section de réception (2) et détermine si des substances non métalliques, ne contenant pas d'eau (F) sont présentes ou non dans l'échantillon (P) contenant de l'eau,
dans lequel la section de réception (2) est conçue de telle sorte que, pendant qu'un passage des proportions d'eau contenues dans l'échantillon (P) contenant de l'eau de l'état d'agrégat liquide (flP) à l'état d'agrégat solide (feP) ou inversement a lieu, elle acquiert pour plusieurs états différents de l'échantillon (P) contenant de l'eau lors du passage des proportions de rayonnement (TS) respectivement modifiées, dans lequel la section d'évaluation (3) est conçue de telle sorte qu'elle génère et évalue des images différentielles de proportions de rayonnement (TS) acquises à différents moments,
dans lequel le système comprend en outre un dispositif d'imagerie (5) pour l'imagerie optique de l'échantillon (P) contenant de l'eau, pour l'imagerie de l'échantillon (P) contenant de l'eau avec un rayonnement électromagnétique avec des longueurs d'onde dans la plage visible pour l'œil humain, dans lequel le système est adapté pour fusionner les images optiques avec les proportions de rayonnement (TS) acquises et pour faire coïncider des proportions de rayonnement (TS) acquises à différents moments en utilisant les images optiques au moyen d'une transformation géométrique.

2. Système selon l'une quelconque des revendications précédentes
***caractérisé en ce que***
le passage de l'état liquide (flP) à l'état solide (feP) ou inversement des proportions d'eau contenue dans l'échantillon (P) contenant de l'eau est effectué au moyen d'une section de conversion (4) du système, de préférence au moyen d'une section de conversion pour modifier la température de l'échantillon (P) contenant de l'eau, en particulier au moyen d'une section de congélation pour congeler l'échantil-Ion (P) contenant de l'eau ou d'une section de décongélation pour décongeler l'échantillon (P) contenant de l'eau.

3. Système selon l'une quelconque des revendications précédentes
***caractérisé en ce que***
la section d'évaluation (3), dans la mesure où elle détermine qu'une (des) substance(s) non métallique(s), ne contenant pas d'eau (F) est (sont) présente(s) dans l'échantillon (P) contenant de l'eau, évalue également les proportions de rayonnement (TS) acquises par la section de réception (2) en ce qui concerne un ou plusieurs paramètre(s) caractérisant l'échantillon (P) contenant de l'eau et/ou la (les) substance(s) non métallique(s), ne contenant pas d'eau (F) qui s'y trouvent,
dans lequel de préférence, ce(s) paramètre(s) peuvent être ou comprendre : la (les) taille(s) et/ou la (les) forme(s) de la (des) substance(s) non métallique(s), ne contenant pas d'eau (F) détectée(s), la position ou la répartition respective de la (des) substance(s) non métallique(s), ne contenant pas d'eau (F) détectée(s) dans l'échantillon (P) contenant de l'eau et/ou la proportion respective en poids ou en volume de la (des) substance(s) non métallique(s), ne contenant pas d'eau (F) détectée(s) dans l'échantillon (P) contenant de l'eau.

4. Système selon l'une quelconque des revendications précédentes
***caractérisé en ce que***
la section d'émission (1) et la section de réception (2) sont agencées de telle sorte que la section de réception (2) acquiert les proportions de rayonnement (TS) modifiées en transmission.

5. Système selon l'une quelconque des revendications précédentes
***caractérisé en ce que***
les proportions de rayonnement (TS) modifiées, respectivement acquises pour les plusieurs états différents de l'échantillon (P) contenant de l'eau lors du passage des proportions d'eau contenues dans l'échantillon (P) contenant de l'eau de l'état d'agrégat liquide (flP) à l'état d'agrégat solide (feP) ou inversement, sont évaluées au moyen de la section d'évaluation (3) en ce qui concerne les différences d'amplitude ou les différences d'intensité et/ou les différences de la permittivité de l'échantillon.

6. Système selon l'une quelconque des revendications précédentes
***caractérisé en ce que***
la section d'émission (1) et/ou la section de réception (2) présente un ou plusieurs dispositif(s) d'émission-réception à base de silicium-germanium.

7. Installation pour le traitement d'échantillons (P) contenant de l'eau, en particulier pour la production, la confection et/ou l'emballage de produits alimentaires en tant que tels échantillons (P), avec
un dispositif de transport (6) pour le transport des échantillons (P), et
un système selon l'une quelconque des revendications précédentes,
***caractérisé en ce que***
la section d'émission (1) présente plusieurs émetteurs (1a, 1b, 1c) individuels, respectivement espacés localement les uns des autres, et la section de réception (2) présente plusieurs récepteurs (2a, 2b, 2c) individuels, respectivement espacés localement les uns des autres,
dans lequel chaque émetteur est associé à exactement un des récepteurs de telle sorte que ledit récepteur, au moment du transport d'un/des échantillon(s) (P) à travers une zone (7a, 7b, 7c) entre ledit émetteur et ledit récepteur au moyen du dispositif de transport (6), acquiert des proportions de rayonnement de l'émetteur qui lui est associé, modifiées par le/les échantillon(s) (P), et
dans lequel la section d'évaluation (3) évalue les proportions de faisceau modifiées respectivement acquises par les plusieurs récepteurs (2a, 2b, 2c).

8. Procédé de détection de substances non métalliques, ne contenant pas d'eau (F) dans un échantillon (P) contenant de l'eau au moyen d'un système ou d'une installation selon l'une quelconque des revendications précédentes, dans lequel
avec une section d'émission (1), un rayonnement électromagnétique (S) dans la plage des térahertz est émis en direction de l'échantillon (P), avec une section de réception (2), des proportions de rayonnement (TS) dudit rayonnement électromagnétique (S) modifiées par l'échantillon et/ou les substances (F) qui s'y trouvent sont acquises sous forme d'image, et avec une section d'évaluation (3) des proportions de rayonnement (TS) acquises par la section de réception (2) sont évaluées et il est déterminé si des substances non métalliques, ne contenant pas d'eau (F) sont présentes ou non dans l'échantillon (P) contenant de l'eau,
dans lequel un passage des proportions d'eau contenues dans l'échantillon (P) contenant de l'eau de l'état d'agrégat liquide (flP) à l'état d'agrégat solide (feP) ou inversement a lieu, dans lequel, pour plusieurs états différents de l'échantillon (P) contenant de l'eau, lors de ce passage, des proportions de rayonnement (TS) respectivement modifiées sont acquises au moyen de la section de réception (2),
et dans lequel des images optiques de l'échantillon (P) contenant de l'eau sont enregistrées dans les plusieurs états différents, avec un rayonnement électromagnétique avec des longueurs d'onde dans la plage visible pour l'œil humain,
dans lequel les images optiques sont fusionnées avec les proportions de rayonnement (TS) acquises
et dans lequel des images différentielles de proportions de rayonnement (TS) acquises à différents moments sont générées et évaluées au moyen de la section d'évaluation (3), dans lequel les proportions de rayonnement (TS) acquises à différents moments sont amenées en coïncidence en utilisant les images optiques au moyen d'une transformation géométrique.

9. Procédé selon la revendication précédente,
***caractérisé en ce que***
dans les différents états de passage de l'échantillon (P) contenant de l'eau, des proportions de rayonnement (TS) modifiées sont respectivement acquises, **en ce que**, à plusieurs moments différents et successifs (t0, t1, t2, ...) lors du passage de l'échantillon (P) contenant de l'eau de l'état d'agrégat liquide (flP) à l'état d'agrégat solide (feP) ou inversement, des proportions de rayonnement (TS) modifiées sont respectivement acquises au moyen de la section de réception (2).
